# EUROPÄISCHE PATENTSCHRIFT

(11) **EP 1 368 386 B1**
(45) Veröffentlichungstag und Bekanntmachung des Hinweises auf die Patenterteilung: **17.01.2007**
(21) Anmeldenummer: 02712885.9
(22) Anmeldetag: 02.02.2002
(51) Int. Cl.: C08F 6/00

(54) **VERFAHREN ZUR ÜBERFÜHRUNG WÄSSRIGER POLYMERISATDISPERSIONEN VON EINEM BEHÄLTER IN EINEN ANDEREN BEHÄLTER**
METHOD FOR TRANSFERRING AQUEOUS POLYMER DISPERSIONS FROM ONE CONTAINER TO ANOTHER CONTAINER
PROCEDE POUR TRANSFERER DES DISPERSIONS POLYMERES AQUEUSES D'UN RECIPIENT A UN AUTRE

(30) Priorität: 13.02.2001 DE 10107044
(43) Veröffentlichungstag der Anmeldung: 10.12.2003
(73) Patentinhaber: BASF Aktiengesellschaft, 67056 Ludwigshafen (DE)
(72) Erfinder: WASSMER, Karl-Heinz, 67112 Mutterstadt (DE); KORB, Hardy, 67098 Bad Dürkheim (DE); FUNKHAUSER, Steffen, 68519 Viernheim (DE); MEISTER, Martin, 67434 Neustadt (DE); WILDBURG, Gerald, 67346 Speyer (DE)
(86) Internationale Anmeldenummer: PCT/EP2002/001093
(87) Internationale Veröffentlichungsnummer: WO 2002/064640

(56) Entgegenhaltungen:
- EP-A- 0 890 582
- EP-A- 1 024 152
- FR-A- 2 347 387

## Beschreibung

Die vorliegende Erfindung betrifft ein verbessertes Verfahren zur Überführung einer wässrigen Polymerisatdispersion, welche eine Temperatur ≥ 50 °C aufweist, aus einem Behälter 1 über eine Verbindungsleitung in einen Behälter 2, welches dadurch gekennzeichnet ist, dass der Behälter 2 vor und während der Überführung Wasserdampf enthält und der Wasserdampfpartialdruck in Behälter 2 größer oder gleich 70% und kleiner oder gleich 100% des Wasserdampfpartialdrucks der wässrigen Polymerdispersion in Behälter 1 ist.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der Durchmesser der Polymerisatpartikel liegt häufig im Bereich von 10 bis 5000 nm. Wässrige Polymerisatdispersionen werden in einer Vielzahl von technischen Anwendungen als sogenannte Bindemittel, beispielsweise in Anstrichfarben oder Putzen, in Leder-, Papier- oder Kunststofffolienbeschichtungen sowie als Komponenten in Klebern eingesetzt.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2^{nd} Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise so, dass man die Monomeren, häufig unter Mitverwendung von Dispergierhilfsmitteln, in wässrigem Medium dispers verteilt und mittels wenigstens eines radikalischen Polymerisationsinitiators polymerisiert.

Als Reaktionstemperatur für die radikalische wässrige Emulsionspolymerisation kommt der gesamte Bereich bis 170 °C in Betracht; Temperaturen von 70 bis 120 °C, vorzugsweise 80 bis 100 °C und besonders bevorzugt > 85 bis 100 °C werden jedoch bevorzugt angewendet. Die radikalische wässrige Emulsionspolymerisation kann bei einem Druck kleiner, gleich oder größer 1 bar (absolut) durchgeführt werden, so dass die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 bar (absolut) unter Inertgasatmosphäre, wie beispielsweise unter Stickstoff oder Argon durchgeführt.

Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder den wässrigen Polymerisatdispersionen weitere übliche Zusatzstoffe, wie beispielsweise bakterizide oder schaumdämpfende Additive zugesetzt.

Insbesondere im industriellen Maßstab ist es günstig, wenn die der wässrigen Emulsionspolymerisation nachgeschalteten Verfahrensschritte nicht im apparativ sowie meß- und regeltechnisch aufwendig ausgestatteten Polymerisationsreaktor durchgeführt werden, sondern in einem einfacher ausgestattetem Reaktionsbehälter, beispielsweise einem sogenannten blow-down-Reaktor oder Konfektionierbehälter erfolgen. Hierzu wird nach Abschluss der Polymerisationsreaktion, in welcher die ethylenisch ungesättigten Monomeren zu ≥ 90 Gew.-%, bevorzugt ≥ 95 Gew.-% und insbesondere zu ≥ 98 Gew.-% umgesetzt wurden, die erhaltene wässrige Polymerisatdispersion ohne Abkühlung über eine Verbindungsleitung in den nachgeschalteten Reaktionsbehälter überführt. Dabei wurde vorgeschlagen, die Überführung derart durchzuführen, dass die wässrige Polymerisatdispersion in den Reaktionsbehälter gepumpt oder durch Anlegen eines Stickstoff- oder Wasserdampfüberdrucks im Polymerisationsreaktor in den Reaktionsbehälter gedrückt wird. Insbesondere ist es günstig, wenn dieser Reaktionsbehälter räumlich tiefer oder sogar unter dem Polymerisationsreaktor angeordnet ist. In diesem Fall kann die wässrige Polymerisatdispersion durch Ausnutzung der Schwerkraft einfach in den Reaktionsbehälter abgelassen werden. Damit die Überführung der wässrigen Polymerisatdispersion in den Reaktionsbehälter besonders rasch erfolgt und der Polymerisationsreaktor so möglichst rasch wieder für die Herstellung der nächsten Polymerisatdispersion zur Verfügung steht, wird die wässrige Polymerisatdispersion oft in einen räumlich tiefer liegenden Reaktionsbehälter sowohl gepumpt als auch gedrückt.

Damit sich in diesem zweiten Reaktionsbehälter kein Überdruck aufbaut, welcher den Überführungsvorgang wieder verlangsamen oder vorzögern würde, wird dieser Behälter entweder in die Atmosphäre (beispielsweise über eine Abgaswäsche oder Muffelfackel) entlüftet oder er wird vor der Überführung auf einen Druck < 100 mbar (absolut) evakuiert. Als nachteilig an diesem Verfahren hat sich jedoch erwiesen, dass sich während der Überführung - und zwar unabhängig davon, ob die wässrige Polymerisatdispersion abgelassen, gepumpt und/oder umgedrückt wird - unerwünschte Polymerisatkoagulate in der wässrigen Polymerisatdispersion bilden. Diese Polymerisatkoagulate mit einer Teilchengröße von wenigen Micrometern bis zu wenigen Zentimetern können die Klarheit der aus den Polymerisaten gebildeten Filme herabsetzen ("Stippen"), die Bindekraft der Polymerisate in Anstrich-, Putz-, Beschichtungs- und Kleberformulierungen reduzieren oder zu störenden Ablagerungen in Produktionsanlagen und Verarbeitungsmaschinen führen.

Aufgabe der vorliegenden Erfindung war es, ein Verfahren zur Überführung einer wässrigen Polymerisatdispersion, welche eine Temperatur ≥ 50 °C aufweist, aus einem Behälter 1 über eine Verbindungsleitung in einen Behälter 2 bereitzustellen, durch welches die Bildung von Polymerisatkoagulat vermieden oder zumindest reduziert werden kann.

Demgemäß wurde das oben beschriebene Verfahren gefunden.

Unter Behältern werden in dieser Schrift Reaktoren, Rührkessel, Zwischen- und Lagerbehälter, aber auch Container, Fässer, Kanister und Dosen etc. unterschiedlichster Größe und Form verstanden. Dabei ist es unerheblich, aus welchem Material die Behälter aufgebaut sind. Zum Einsatz kommen beispielsweise verschiedenste legierte und unlegierte Qualitätsstähle, chemisch beständige Edelstahlsorten, wie 1.4541-, und 1.4571-Stahl, aber auch Aluminium, die gegebenenfalls mit unterschiedlichsten Innenbeschichtungen, wie Emaille, Silber, Zink und Zinn oder Kunststoffen, wie beispielsweise PTFE und Lacken versehen sein können oder Kunststoffe, wie beispielsweise Polyethylen, Polypropylen, Polystyrol, Polyarcylamid und glasfaserverstärkte Kunstharze. Diese Behälter können unterschiedlichste Einbauten, wie beispielsweise Rührer, Wärmetauscher, Heiz- und/oder Kühlschlangen, Strömungsbrecher und Meßfühler, aber auch verschiedenste Anschlüsse und Öffnungen, die gegebenenfalls durch Verschlüsse, wie Kugelhähne, Ventile unterschiedlichster Bauart sowie Schraubdeckel etc. verschließbar sind, enthalten.

Erfindungsgemäß vorteilhaft ist es, wenn die Temperatur der Innenoberflächen der Verbindungsleitung und des Behälters 2 mit denen die wässrige Polymerisatdispersion während der Überführung in Kontakt kommt, kleiner oder gleich der Temperatur der wässrigen Polymerisatdispersion in Behälter 1 ist.

Die Temperatur der wässrigen Polymerisatdispersion beträgt oft ≥ 50 °C, ≥ 60 °C, ≥ 70 °C, ≥ 80 °C oder ≥ 90 °C sowie ≤ 170 °C, ≤ 150 °C, ≤ 130 °C, ≤ 110 °C, ≤ 100 °C, ≤ 95 °C oder ≤ 90 °C und alle Werte dazwischen. In der Regel liegt die Temperatur jedoch zwischen 50 und 100 °C, häufig zwischen 60 und 95 °C und insbesondere zwischen 65 und 90 °C.

Von Vorteil ist ist, dass der Wasserdampfpartialdruck in Behälter 2 vor und während der Überführung der wässrigen Polymerisatdispersion ≥ 100 mbar ist. Verfahrenswesentlich ist ist es, wenn der Wasserdampfpartialdruck in Behälter 2 ≥ 70 %, ≥ 80 % oder ≥ 90 % und ≤ 100 % des Wasserdampfpartialdrucks der wässrigen Polymerisatdispersion in Behälter 1 ist.

Der Wasserdampfpartialdruck der wässrigen Polymerisatdispersion in Behälter 1 ist prinzipiell abhängig von Wassergehalt, der Temperatur sowie den sonstigen Bestandteilen der wässrigen Polymerisatdispersion. Er lässt sich in erster Näherung in einfacher Weise dadurch bestimmen, indem man beispielsweise die wässrige Polymerisatdispersion bei 20 °C in ein verschließbares Gefäß gibt, an welches ein Druckmessgerät angeschlossen ist und das Gefäß auf einen selbst festgelegten Enddruck, beispielsweise 30 mbar (absolut) evakuiert. Anschließend erhitzt man die wässrige Polymerisatdispersion auf die Temperatur, die diese in Behälter 1 aufweist. Der sich dabei einstellende Gleichgewichtsdruck im Gefäß, abzüglich des vorher vorliegenden Restdruckes, ergibt dann den Wasserdampfpartialdruck der wässrigen Polymerisatdispersion bei der vorgegebenen Temperatur. Von Bedeutung ist, dass der Wasserdampfpartialdruck einer wässrigen Polymerisatdispersion bei einer gegebenen Temperatur in guter Näherung dem Wasserdampfpartialdruck von reinem Wasser bei gleicher Temperatur entspricht. Die Temperaturabhängigkeit des Wasserdampfpartialdrucks von Wasser ist dem Fachmann bekannt bzw. kann von ihm in geläufigen Nachschlagewerken, beispielsweise dem Handbook of Chemistry and Physics, 80^{th} Edition, 1999-2000, Kap. 6-10 bis 6-11, CRC-Press, nachgeschlagen werden.

Der Wasserdampfpartialdruck in Behälter 2 lässt sich beispielsweise dadurch einstellen, dass die Kesselwand und die Einbauten des leeren Behälters 2 auf eine Temperatur kleiner oder gleich der Temperatur der wässrigen Polymerisatdispersion in Behälter 1 aufgeheizt und Wasserdampf mit gleicher oder niederer Temperatur unter Verdrängung des im Behälter 2 enthaltenen Gases, häufig Luft oder Stickstoff, eingeleitet wird. Vor der Überführung der wässrigen Polymerisatdispersion kann gegebenenfalls angefallenes Wasserdampfkondensat abgetrennt werden.

Besonders vorteilhaft ist es, wenn der leere Behälter 2 vor der Überführung auf einen Druck ≤ 100 mbar, ≤ 90 mbar oder ≤ 80 mbar (absolut) evakuiert und anschließend durch Einleiten von Wasserdampf ein Wasserdampfdruck von ≥ 100 mbar, ≥ 200 mbar, ≥ 300 mbar, ≥ 400 mbar, ≥ 500 mbar, ≥ 600 mbar oder ≥ 700 mbar und ≤ 1000 mbar, ≤ 900 mbar, ≤ 800 mbar oder ≤ 700 mbar und alle Werte dazwischen eingestellt wird. Häufig wird in Behälter 2 vor der Überführung ein Wasserdampfpartialdruck zwischen 300 bis 700 mbar eingestellt. Wesentlich ist, dass die Überführung der wässrigen Polymerisatdispersion üblicherweise ohne Druckausgleich bzw. Entlüftung des Behälters 2 erfolgt.

Eine weitere Ausführungsform des erfindungsgemäßen Verfahrens zeichnet sich dadurch aus, dass zuerst die Verbindungsleitung mit der wässrigen Polymerisatdispersion gefüllt und danach die Überführung der wässrigen Polymerisatdispersion in den Behälter 2 erfolgt. Hierzu ist es erforderlich, dass wenigstens an beiden Enden der Verbindungsleitung, d.h. in räumlicher Nähe der Auslassöffnung des Behälters 1 bzw. der Einlassöffnung des Behälters 2, eine Absperrvorrichtung, beispielsweise ein Kugelhahn, Ventil oder Absperrschieber, vorhanden ist. Bei längeren Verbindungsleitungen ist darüber hinaus eine Entlüftungsleitung vorteilhaft. Erfindungsgemäß wird nun vor der Überführung zuerst die Verbindungsleitung durch Öffnen der Absperrvorrichtung an der Auslassöffnung des Behälters 1 und gegebenenfalls der Entlüftungsleitung mit wässriger Polymerisatdispersion gefüllt. Erst danach wird die Absperrvorrichtung an der Einlassöffnung des Behälters 2 geöffnet und die wässrige Polymerisatdispersion in den Behälter 2 überführt. Diese Ausführungsform ist insbesondere dann sehr effektiv, wenn der Behälter 2 einen Unterdruck aufweist.

Das erfindungsgemäße Verfahren verhindert bzw. vermindert vorteilhaft die Bildung störender Polymerisatkoagulate in wässrigen Polymerisatdispersionen während deren Überführung von einem Behälter in einen anderen. Ebenfalls verhindert bzw. vermindert werden Polymerisatbeläge in der Verbindungsleitung sowie an der Einlassöffnung des Behälters 2. Das vorliegende Verfahren ist technisch leicht realisierbar und gewährleistet bei der Herstellung wässriger Polymerisatdispersionen die optimale Ausnutzung der Polymerisationskapazitäten. Darüber hinaus ist das beschriebene Verfahren prinzipiell nicht auf wässrige Polymerisatdispersionen beschränkt, sondern kann allgemein bei wässrigen oder nichtwässrigen Polymerisatdispersionen, -lösungen oder -suspensionen angewendet werden. Wird hierbei beispielsweise ein nichtwässriges Medium zur Aufnahme der Polymerisate eingesetzt, so ist jedoch anstelle des Wasserdampfes der Dampf des zur Aufnahme der Polymerisate eingesetzten nichtwässrigen Mediums zu verwenden.

### Beispiele

### Analytik

Der zahlenmittlere Teilchendurchmesser der Polymerisatteilchen wurde durch dynamische Lichtstreuung an einer 0,005 bis 0,01 gewichtsprozentigen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13 321).

Der Feststoffgehalt wurde bestimmt, indem eine aliquote Menge der wässrigen Polymerisatdispersion 6 Stunden bei 140 °C in einem Trockenschrank getrocknet wurde. Es wurden zwei separate Messungen durchgeführt. Der angegebene Wert stellt den Mittelwert der beiden Meßergebnisse dar.

Die Bestimmung der Koagulatmenge erfolgte durch Filtration über ein Metallsieb mit einer Maschenweite von 45 µm. Hierzu wurden 100 g der wässrigen Polymerisatdispersion bei 20 bis 25 °C (Raumtemperatur) über das 45 µm-Sieb filtriert, welches vor der Filtration gewogen wurde. Nach der Filtration spülte man das Sieb mit wenig entionisiertem Wasser und trocknete es dann im Trockenschrank bei 100 °C und Atmosphärendruck bis zur Gewichtskonstanz. Nach Abkühlen auf Raumtemperatur wurde das Sieb erneut gewogen. Der Gehalt an Koagulat ergab sich als Differenz der einzelnen Wägungen, jeweils bezogen auf die filtrierte Menge an wässriger Polymerisatdispersion.

### Überführungsversuche

Die Überführungsversuche erfolgten mit einer Acrylatdispersion, welche einen Feststoffgehalt von 50,3 Gew.-% aufwies und deren Polymerisatteilchen durch Polymerisation einer Monomerenmischung, enthaltend 87,2 Gew.-% 2-Ethylhexylacrylat, 10,8 Gew.-% Acrylnitril und 2,0 Gew.-% Acrylsäure, erhalten wurde. Der zahlenmittlere Teilchendurchmesser betrug 370 nm. Der Gehalt an Koagulat > 45 µm wurde zu 0,06 Gew.-% bestimmt.

Die für die Überführungsversuche verwendete Apparatur bestand aus zwei beheizbaren 2 1-Doppelwandedelstahlbehältern, wobei Behälter 1 mit einem Ankerrührer, Thermometer, Befüllstutzen sowie je einem Anschluss an ein Vakuum- und ein Wasserdampfsystem und Behälter 2 mit je einem Anschluss an ein Vakuum-, Wasserdampf- und ein Belüftungssystem, einem Ankerrührer, einem Thermometer und einem Entleerungsstutzen ausgerüstet war. Zwischen den Behältern befand sich eine ca. 70 cm lange Überführungsleitung aus Edelstahl, welche einen Innendurchmesser von 6 mm und je ein Absperrvorrichtung an beiden Enden hatte. Die Absperrvorrichtung in räumlicher Nähe zur Auslassöffnung des Behälters 1 wird im folgenden "Auslasshahn" und die Absperrvorrichtung in räumlicher Nähe zur Einlassöffnung des Behälters 2 als "Einlasshahn" bezeichnet. Behälter 1 war seitlich versetzt über Behälter 2 angeordnet. Die in die Überführungsleitung mündende Auslassöffnung des Behälters 1 befand sich in dessen Boden, während sich die in die Überführungsleitung mündende Einlassöffnung des Behälters 2 in dessen Deckel befand. Vor den Überführungsversuchen waren beide Behälter und die Überführungsleitung jeweils leer und trocken.

### Beispiel 1

1,5 1 der vorgenannten wässrigen Polymerisatdispersion wurden bei 85 °C unter Rühren (100 Umdrehungen pro Minute) in Behälter 1 vorgelegt. Behälter 2 und die Überführungsleitung (Einlasshahn an Behälter 2 offen und Auslasshahn an Behälter 1 geschlossen) evakuierte man auf 50 mbar (absolut) und heizte die Behälterinnenwände auf 85 °C auf. Anschließend wurde die Vakuumleitung und der Einlasshahn geschlossen und Wasserdampf bis zu einem Behälterinnendruck von 500 mbar (absolut) in den Behälter 2 eingeleitet. Danach wurde der Auslasshahn langsam geöffnet, so dass die Überführungsleitung langsam mit wässriger Polymerisatdispersion geflutet wurde. Anschließend presste man 2 bar Wasserdampf in den Behälter 1 und öffnete den Einlasshahn derart, dass man für die Überführung der wässrigen Polymerisatdispersion in den Behälter 2 30 Sekunden benötigte. Unmittelbar nach Entleerung des Behälters 1 wurden die Wasserdampfleitung und der Auslasshahn und erst danach der Einlasshahn geschlossen. Anschließend schaltete man den Rührer in Behälter 2 ein (100 Umdrehungen pro Minute) und ließ die wässrige Polymerisatdispersion noch 60 Sekunden nachrühren. Danach wurde die Belüftungsleitung geöffnet und die wässrige Polymerisatdispersion auf Raumtemperatur abgekühlt.

Der Koagulatgehalt > 45 µm der nach der Überführung erhaltenen wässrigen Polymerisatdispersion wurde zu 0,31 Gew.-% bestimmt.

### Beispiel 2

Beispiel 2 erfolgte analog zu Beispiel 1, nur dass in Behälter 2 Wasserdampf bis zu einem Behälterinnendruck von 550 mbar (absolut) eingeleitet wurde.

Der Koagulatgehalt > 45 µm der nach der Überführung erhaltenen wässrigen Polymerisatdispersion wurde zu 0,22 Gew.-% bestimmt.

### Beispiel 3

Beispiel 3 erfolgte analog zu Beispiel 1, nur dass in Behälter 2 Wasserdampf bis zu einem Behälterinnendruck von 600 mbar (absolut) eingeleitet wurde.

Der Koagulatgehalt > 45 µm der nach der Überführung erhaltenen wässrigen Polymerisatdispersion wurde zu 0,17 Gew.-% bestimmt.

### Beispiel 4

Beispiel 4 erfolgte analog zu Beispiel 1, nur dass in Behälter 2 Wasserdampf bis zu einem Behälterinnendruck von 630 mbar (absolut) eingeleitet wurde.

Der Koagulatgehalt > 45 µm der nach der Überführung erhaltenen wässrigen Polymerisatdispersion wurde zu 0,06 Gew.-% bestimmt.

### Vergleichsbeispiel

Das Vergleichsbeispiel erfolgte analog zu Beispiel 1, nur dass in Behälter 2 kein Wasserdampf eingeleitet wurde.

Der Koagulatgehalt > 45 µm der nach der Überführung erhaltenen wässrigen Polymerisatdispersion wurde zu 0,66 Gew.-% bestimmt.

## Patentansprüche

1. Verfahren zur Überführung einer wässrigen Polymerisatdispersion, welche eine Temperatur ≥ 50 °C aufweist, aus einem Behälter 1 über eine Verbindungsleitung in einen leeren Behälter 2, **dadurch gekennzeichnet, dass** der Behälter 2 vor und während der Überführung Wasserdampf enthält und der Wasserdampfpartialdruck in Behälter 2 größer oder gleich 70 % und kleiner oder gleich 100% des Wasserdampfpartialdrucks der wässrigen Polymerisatdispersion in Behälter 1 ist.

2. Verfahren nach Anspruch 1, **dadurch gekennzeichnet, dass** die Temperatur der Innenoberflächen der Verbindungsleitung und des Behälters 2 mit denen die wässrige Polymerisatdispersion während der Überführung in Kontakt kommt, kleiner oder gleich der Temperatur der wässrigen Polymerisatdispersion in Behälter 1 ist.

3. Verfahren nach einem der Ansprüche 1 oder 2, **dadurch gekennzeichnet, dass** der Behälter 2 vor der Überführung auf einen Druck von ≤ 100 mbar (absolut) evakuiert, anschließend in Behälter 2 ein Wasserdampfpartialdruck von 300 bis 700 mbar eingestellt und danach die wässrige Polymerisatdispersion ohne Druckausgleich in den Behälter 2 überführt wird.

4. Verfahren nach einem der Ansprüche 1 bis 3, **dadurch gekennzeichnet, dass** zuerst die Verbindungsleitung mit der wässrigen Polymerisatdispersion gefüllt und danach die Überführung der wässrigen Polymerisatdispersion in den Behälter 2 erfolgt.

5. Verfahren zur Überführung einer Polymerisatdispersion, -lösung oder -suspension aus einem Behälter 1 über eine Verbindungsleitung in einen leeren Behälter 2, **dadurch gekennzeichnet, dass** der Behälter 2 vor und während der Überführung Dampf des flüssigen Mediums enthält, welches zur Aufnahme des Polymerisats eingesetzt wurde und der Dampfdruck des flüssigen Mediums ≥ 70 % und kleiner oder gleich 100% des Gleichgewichtsdampfdrucks des flüssigen Mediums bei der Temperatur ist, die die Polymerisatdispersion, -lösung oder -suspension während der Überführung aufweist.

## Claims

1. A method of transferring an aqueous polymer dispersion with a temperature ≥ 50°C from a vessel 1 via a connecting line to an empty vessel 2, wherein the vessel 2, before and during the transfer, contains water vapor and the water vapor partial pressure in vessel 2 is greater than or equal to 70% and less than or equal to 100% of the water vapor partial pressure of the aqueous polymer dispersion in vessel 1.

2. The method according to claim 1, wherein the temperature of the inner surfaces of the connecting line and of the vessel 2 with which the aqueous polymer dispersion comes into contact during the transfer is less than or equal to the temperature of the aqueous polymer dispersion in vessel 1.

3. The method according to either of claims 1 and 2, wherein before the transfer the vessel 2 is evacuated to a pressure of ≤ 100 mbar (absolute), then in vessel 2 a water vapor partial pressure of from 300 to 700 mbar is set and thereafter the aqueous polymer dispersion is transferred to the vessel 2 without pressure compensation.

4. The method according to any of claims 1 to 3, wherein first the connecting line is filled with the aqueous polymer dispersion and then the aqueous polymer dispersion is transferred to the vessel 2.

5. A method of transferring a polymer dispersion, solution or suspension from a vessel 1 via a connecting line to an empty vessel 2, wherein the vessel 2, before and during the transfer, contains vapor of the liquid medium which was used to take up the polymer, and the vapor pressure of the liquid medium is ≥ 70% and less than or equal to 100% of the equilibrium vapor pressure of the liquid medium at the temperature possessed by the polymer dispersion, solution or suspension during the transfer.

## Revendications

1. Procédé de transfert d'une dispersion aqueuse de polymère, qui présente une température ≥ 50°C, d'un récipient 1 à un récipient vide 2 par l'intermédiaire d'un conduit de communication, **caractérisé en ce que** le récipient 2 contient de la vapeur d'eau avant et pendant le transfert et la pression partielle de vapeur d'eau dans le récipient 2 est supérieure ou égale à 70 % et inférieure ou égale à 100 % de la pression partielle de vapeur d'eau de la dispersion aqueuse de polymère dans le récipient 1.

2. Procédé suivant la revendication 1, **caractérisé en ce que** la température des surfaces internes du conduit de communication et du récipient 2, avec lesquelles la dispersion aqueuse de polymère vient en contact pendant le transfert, est inférieure ou égale à la température de la dispersion aqueuse de polymère dans le récipient 1.

3. Procédé suivant l'une des revendications 1 ou 2, **caractérisé en ce que** le récipient 2 est, avant le transfert, mis sous vide à une pression de ≤ 100 mbars (absolus), ensuite une pression partielle de vapeur d'eau de 300 à 700 mbars est ajustée dans le récipient 2 et puis la dispersion aqueuse de polymère est transférée dans le récipient 2 sans égalisation de pression.

4. Procédé suivant l'une des revendications 1 à 3, **caractérisé en ce que** tout d'abord le conduit de communication est rempli de la dispersion aqueuse de polymère et ensuite le transfert de la dispersion aqueuse de polymère a lieu dans le récipient 2.

5. Procédé de transfert d'une dispersion, solution ou suspension de polymère d'un récipient 1 à un récipient vide 2 par l'intermédiaire d'un conduit de communication, **caractérisé en ce que** le récipient 2 contient, avant et pendant le transfert, de la vapeur du milieu liquide qui a été mis en oeuvre pour recevoir le polymère et la pression de vapeur du milieu liquide est ≥ 70 % et inférieure ou égale à 100 % de la pression de vapeur d'équilibre du milieu liquide à la température que présente la dispersion, solution ou suspension de polymère pendant le transfert.
